# EUROPEAN PATENT APPLICATION

(11) **EP 2 711 679 A2**
(43) Date of publication of application: **26.03.2014**
(21) Application number: 13179613.8
(22) Date of filing: 07.08.2013
(51) Int. Cl.: G01M 5/00

(54) **Method and system for predicting the serviceable life of a component**

(30) Priority: 20.09.2012 GB 201216787
(71) Applicant: Rolls-Royce plc, London SW1E 6AT (GB)
(72) Inventor: Balandier, Quentin Luc, Derby, DE1 3PF (GB)
(74) Representative: Yeomans, Victoria Jane Anora

(57) **Abstract**

The remaining serviceable life of a component of a gas turbine engine can be predicted by monitoring one or more topographical features of the component which are arranged so as to cause a non-hazardous crack to be initiated at one or more of the topographical features during the course of operation of the gas turbine engine.

## Description

### Field of the Invention

The present invention relates to a method for predicting the serviceable life of a component subjected to service loading and a system for performing such predictive analysis. In particular, the method and system relate to components of a gas turbine engine.

### Background to the Invention

Component parts for aircraft jet engines are monitored at regular intervals and are generally replaced when they reach a fixed service life. This life limit is termed the Declared Safe Cyclic Life (DSCL). This replacement is undertaken irrespective of the serviceability of the component part when it reaches the DSCL.

The in-service loading of aircraft gas turbine components includes a variety of stress mechanisms including complex three-dimensional stress fields, low cycle fatigue. high cycle fatigue, elasto-plastic loading, oxidation and erosion. In addition, the levels of stress experienced by such components can vary widely across the different parts of the flight cycle, i.e. taxiing, take-off, cruise and landing.

Due to these various operational factors, it is difficult to predict a serviceable life limit for individual component parts.

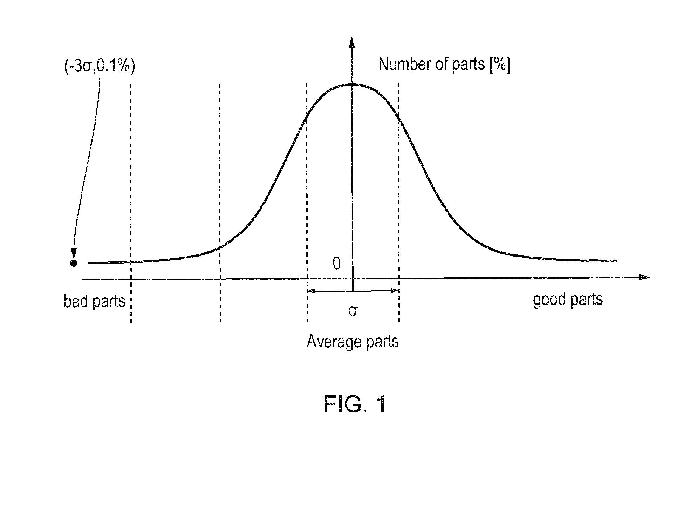

As a result, the DSCL for a component part is determined on a statistical basis using a minimum service life which is arrived at by considering the part to have physical properties corresponding to -3σ from a mean value (see Figure 1). In other words, the DSCL of the component is calculated assuming that the component has the worst material properties in a sample of 1000 components.

Consequently, in the above-mentioned example, when the parts reach the DSCL, 999 parts from a sample of 1000 parts will be scrapped whilst being un-cracked. This approach, while ensuring that the likelihood of parts failing in-service is minimised, does result in the scrappage of a considerable quantity of parts which may have considerable remaining safe working life. This results in costly routine engine overhauls.

It is known to routinely inspect component parts of aircraft gas turbine engines at regular intervals in order to determine whether the part is cracked. A problem with this approach is the need to employ non-destructive testing (NDT) techniques to detect the onset of cracking which could potentially lead to hazardous failure of the component.

### Statements of Invention

In the following disclosure, the term "non-hazardous crack" is used to describe a crack which can propagate without catastrophic failure of the component, while the term "hazardous crack" is used to describe a crack whose propagation will result in catastrophic failure of the component.

According to a first aspect of the present invention there is provided a method of predicting a remaining serviceable life of a component for a gas turbine engine, the method comprising the steps of:
(a) providing the component with a detection feature, the detection feature comprising one or more topographical features of the component;
(b) monitoring the component to determine a crack status for each of the one or more topographical features;
(c) using the crack status to provide a user with an indication of the remaining serviceable life of the component.

The presence of a detection feature in the component results in a concentration of stress at the detection feature which results in the initiation of a non-hazardous crack at the detection feature.

The method of the invention thus enables the determination of a serviceable life for gas turbine engine components based on the presence of "obvious" detectable non-hazardous cracks. A given number of non-hazardous cracks will be initiated prior to the initiation of any hazardous cracks.

The detection features of the invention are characterised by a concentration of stress, which will ultimately result in the generation of a non-hazardous crack during the life of the part, thus enabling the determination of a remaining servable life for the component..

The term topographical feature refers to a feature of the component including, but not limited to, a hole, a notch, a groove, a boss, a flange.

In embodiments of the invention in which the detection feature comprises two or more topographical features, the topographical features can be positioned such that successive topographical features have increasing local stress concentration factors. These stress concentration factors can be readily derived from the geometry of the component and the material properties, and are readily determined by known analytical techniques.

For example, the closer the detection feature is to an edge, the higher will be the stress concentration, and the more likely that a crack will be initiated at the detection feature during the stress loading of the component.

Consequently, where the detection features comprises several topographical features that are positioned at differing distances from an edge, the presence of cracks at successive topographical features can indicate the level of stress to which the component has been exposed, and thus an indication of the remaining life before the initiation of a hazardous crack. Thus, by monitoring the one or more topographical features for the presence of cracks, the reduction in remaining serviceable life of the component can be readily determined. This enables the planned replacement of the component to be effected based on the actual serviceable life of the individual component. This in turn can significantly reduce the quantity of parts which are scrapped while still being serviceable.

The determination of a crack status for each of the one or more topographical features includes monitoring for the presence or absence of a crack at a respective one of the topographical features.

Optionally, the detection feature is positioned within a region of the component such that, in use, a stress experienced by the component in the region of the detection feature is representative of a loading applied to the component.

The loading mode which induced the initiation of a crack at the detection should be the same loading mode which defines a hazardous failure mode for the component.

Optionally, the detection feature is positioned within a region of the component such that, in use, a stress experienced by the component in the region of the detection feature is equal to or greater than a maximum stress experienced by the component.

By positioning the detection feature in a region of the component which is subject to the highest stress, any crack which is initiated by the stress loading will, due to the stress concentration at the detection feature, be first initiated at the detection feature.

This enables the serviceable life of the component to be safely predicted.

Optionally, the step of monitoring the component to determine a crack status for each of the one or more topographical features comprises the step of visually inspecting a surface of the component to thereby determine a crack status for each of the one or more topographical features.

A feature of the invention is that the detection feature is arranged such that any crack initiated at the detection feature can be readily detected by visual means. This makes the method of the invention more easily implemented and since the use of costly and complex NDT inspection techniques.

In other arrangements, the monitoring of the component may be undertaken by any convenient inspection method. This may include ultrasonic, x-ray analysis or fluoro-penetrant dye inspection.

Optionally, the detection feature comprising at least two topographical features of the component, whereby each of a first, second and any subsequent topographical features is positioned within a respective zone of the component which, in use, experiences correspondingly increasing mechanical stress.

The component part may incorporate several detection features. These detection features may be positioned in the same area of the component, for example if there is a single part of the component which is more highly stressed than the remainder.

Alternatively the several detection features may be positioned in different areas of the component, for example if there are several parts of the component which are considered to be critical to the service life of the component.

Optionally, the detection feature is added to the component after the component is formed.

Optionally, the detection feature is incorporated into the component during the manufacture of the component.

The detection feature may take the form of a hole drilled into the component. In one embodiment of the invention, the detection feature comprises a hole of between 5mm and 10mm in diameter.

Alternatively, a notch, groove or other geometrical feature may be machined into the component.

In other arrangements, the detection feature is formed as an integral part of the component during the manufacture of the component.

According to a second aspect of the present invention there is provided a system for predicting a remaining serviceable life of a component for a gas turbine engine, the component comprising a detection feature, the detection feature comprising one or more topographical features of the component, whereby the system comprises:
a detection device adapted to monitor the detection feature to obtain a crack status for each of the one or more topographical features;
a calculating means such as a computer device having a processor portion and a data storage portion; and
a computer program comprising algorithms for analysing the crack status and predicting a remaining serviceable life of the component.

The detection device may take the form of any convenient inspection device, such as, for example, a machine vision system which visually analyses a surface of the component.

Alternatively, the detection device may be an ultrasonic or x-ray analysis system.

By determining whether or not a crack is present at the one or more topographical features, the detection device determines a crack status for the respective topographical feature. Optionally, the detection feature is positioned within a region of the component such that, in use, a stress experienced by the component in the region of the detection feature is equal to or greater than a maximum stress experienced by the component.

Optionally, the monitoring of the detection feature comprises a visual inspection of a surface of the component in the region of the detection feature.

Optionally, the detection feature comprises at least two topographical features of the component, and
each of a first, second and any subsequent topographical features is positioned within a respective zone of the component which, in normal service conditions, experiences correspondingly increasing mechanical stress.

According to a third aspect of the present invention there is provided a topographical feature of a component for a gas turbine engine, comprising one or more holes, wherein each of the one or more holes is positioned within a region of the component such that, in use, a stress experienced by the component in the region of any one of the one or more holes is equal to or greater than a maximum stress experienced by the component.

Optionally, each of a first, second and any subsequent topographical features is positioned within a respective zone of the component which, in normal service conditions, experiences correspondingly increasing mechanical stress.

Other aspects of the invention provide devices, methods and systems which include and/or implement some or all of the actions described herein. The illustrative aspects of the invention are designed to solve one or more of the problems herein described and/or one or more other problems not discussed.

### Brief Description of the Drawings

There now follows a description of an embodiment of the invention, by way of non-limiting example, with reference being made to the accompanying drawings in which:
Figure 1 shows a typical distribution of serviceable life for a typical component for a gas turbine engine;
Figure 2 is a schematic view of part of a component having a detection feature, comprising a single topographical feature, according to a first embodiment of the invention;
Figure 3A is a schematic view of a component having a detection feature, comprising a plurality of topographical features, according to a second embodiment of the invention, in which a single topographical feature is cracked;
Figure 3B is a schematic view of the component of Figure 3A, in which several topographical features are cracked; and
Figure 4 shows a turbine disc having two detection features according to the second embodiment of the invention.

It is noted that the drawings may not be to scale. The drawings are intended to depict only typical aspects of the invention, and therefore should not be considered as limiting the scope of the invention. In the drawings, like numbering represents like elements between the drawings.

### Detailed Description

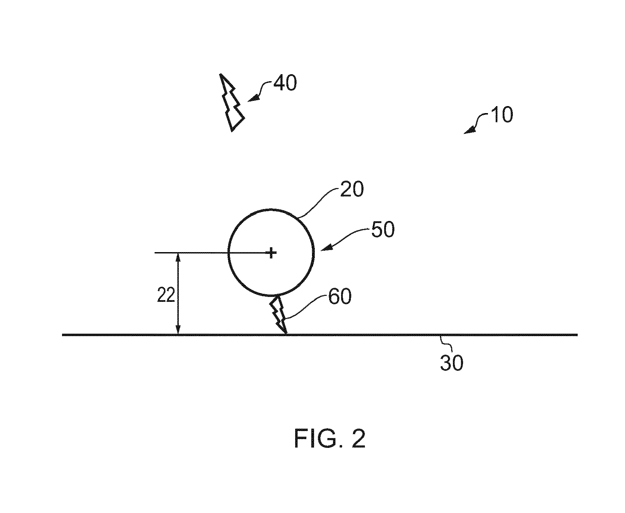

Referring to Figure 2, a component incorporating a detection feature according to a first embodiment of the invention is designated generally by the reference numeral 10.

In the embodiment of Figure 2, the detection feature 20 is formed as a single topographical feature 20, in the form of a hole 50; the hole 50 being positioned at a radially outermost portion of the component. The hole 50 is located a pre-determined distance 22 from a free edge 30 of the component 10.

The distance 22 is determined such that the resulting stress concentration factor at the topographical feature 20 results in the initiation of a non-hazardous crack 60 during use of the component 10. The non-hazardous crack 60 is initiated earlier in the service life of the component 10 than any hazardous crack 40.

The size and positioning of the hole 50 is determined by any known analytical modelling technique (such as, for example, finite element analysis).

In use, the component is visually inspected for cracks at the detection feature, at pre-determined intervals, such intervals being generally determined on the basis of the number of hours for which the gas turbine engine has been in operation.

At the inspection interval, if a crack is detected at the detection feature, the component will be scrapped and replaced. However, if no crack is detected, the component may be refitted to the engine and the engine operated until the next inspection interval.

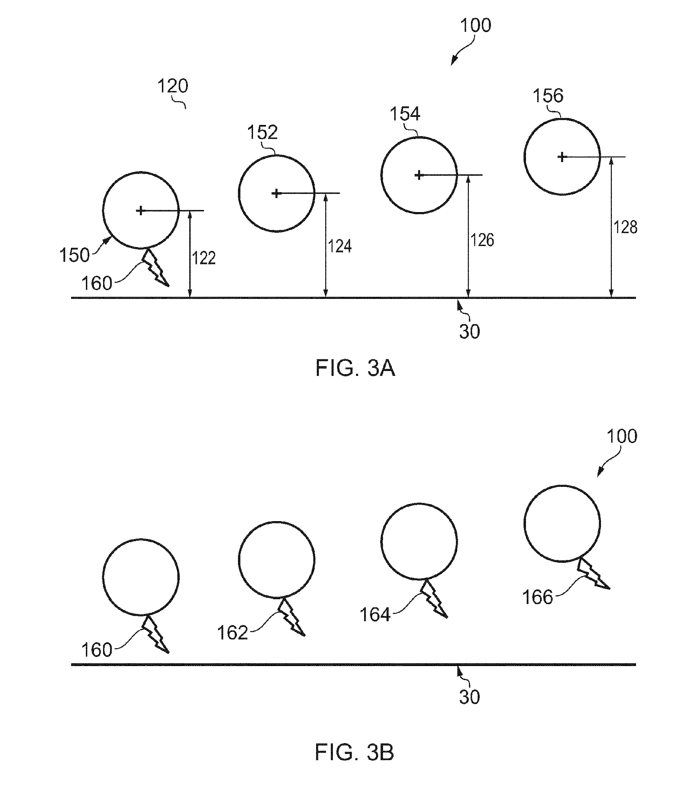

Referring to Figures 3A and 3B, a component incorporating a detection feature according to a second embodiment of the invention is designated generally by the reference numeral 100. Features of the component 100 which correspond to those of component 10 have been given corresponding reference numerals for ease of reference.

The component 100 has a detection feature 120 which is formed as a topographical feature 120 comprising an array of four holes 150,152,154,156. Each of the four holes 150,152,154,156 are positioned a successively greater distance 122,124,126,128 from a free edge 30 of the component 100.

As previously described in relation to the first embodiment, the diameter and location of each of the holes 150,152,154,156 is arranged such that a non-hazardous crack 160 is initiated at a first hole 150 following a first quantity of operational hours of operation of the component 100.

The second, third and fourth holes 152,154,156 are sized and located in the component 100 such that corresponding non-hazardous cracks 162,164,166 are initiated following successive periods of operation of the component 100.

Routine inspections of the equipment of which the component 100 is a part can then be scheduled such that, at each successive inspection, the presence of a non-hazardous crack at successive ones of the first, second, third and fourth holes 150,152,154,156 is indicative of the remaining useful service life of the component.

In other words, when the component is inspected, if no cracks are detected at any of the holes then the component may safely be returned to service in the engine and the engine operated until the next inspection interval.

If a crack is detected at a first hole only, then again the component can safely be operated until the next inspection interval. Similarly, if at the next inspection interval a crack is detected at a second hole (so now both the first and second holes have cracks associated with them) the component may still be safely operated until the following inspection interval.

This process of inspection at pre-determined intervals can continue until at one such inspection a crack is detected at the fourth hole, at which point the component is scrapped and replaced.

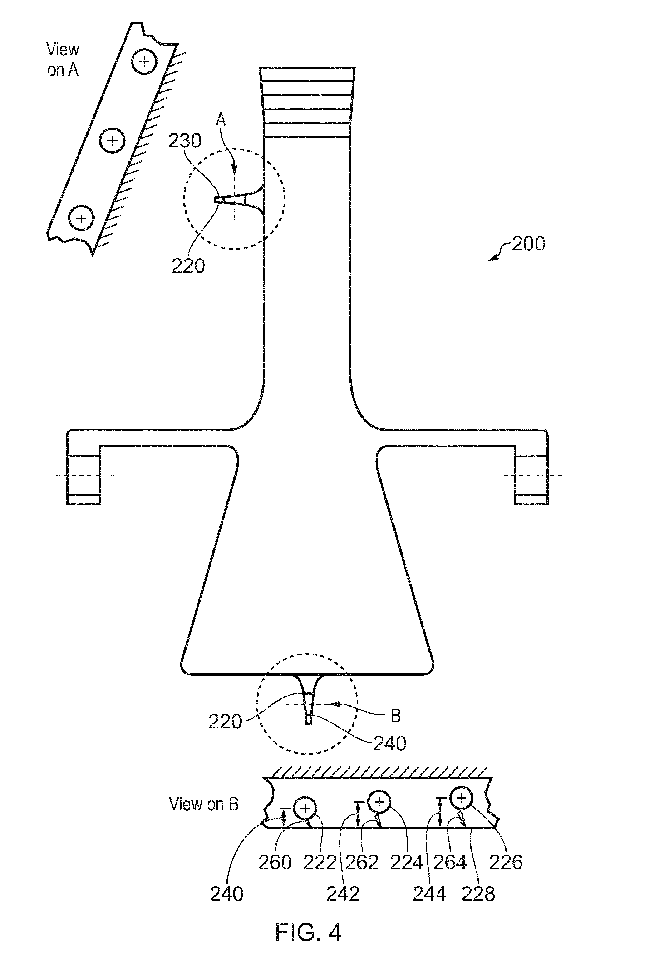

The detection feature 20,120 of Figures 2 and 3 may be formed on any component within the gas turbine engine which is required to be monitored for integrity, particularly turbine discs and blades. Figure 4 shows an example of a turbine disc 200 which comprises two detection features 220 according to the second embodiment of the invention.

As mentioned above, the detection feature may be formed within the confines of the components original geometry. Alternatively, as shown in Figure 4, the detection feature may be formed on a dedicated spur or other projection 230,240.

Each of the detection features 220 is formed as a topographical feature 220 comprising an array of three holes 222,224,226. Each of the three holes 222,224,226 are positioned a successively greater distance 240,242,246 from a free edge 228 of the projection 230,240.

As described above in relation to the second embodiment, the three holes 222,224,226 are sized and located such that a non-hazardous crack 260 is initiated at a first hole 222 following a first quantity of operational hours of operation of the turbine disc 200. Corresponding non-hazardous cracks 262,264 are initiated at second and third holes 224,226 following successive periods of operation of the turbine disc 200.

The foregoing description of various aspects of the invention has been presented for purposes of illustration and description. It is not intended to be exhaustive or to limit the invention to the precise form disclosed, and obviously, many modifications and variations are possible. Such modifications and variations that may be apparent to a person of skill in the art are included within the scope of the invention as defined by the accompanying claims.

## Claims

1. A method of predicting a remaining serviceable life of a component (10;100) for a gas turbine engine, the method comprising the steps of:
(a) providing the component (10;100) with a detection feature (20;120;220), the detection feature comprising one or more topographical features of the component (10;100);
(b) monitoring the component (10;100) to determine a crack status for each of the one or more topographical features;
(c) using the crack status to provide a user with an indication of the remaining serviceable life of the component (10;100).

2. The method as claimed in Claim 1, wherein the detection feature (20;120;220) is positioned within a region of the component (10;100) such that, in use, a stress experienced by the component (10;100) in the region of the detection feature (20;120;220) is representative of a loading applied to the component (10;100).

3. The method as claimed in Claim 1 or Claim 2, wherein the detection feature (20;120;220) is positioned within a region of the component (10;100) such that, in use, a stress experienced by the component (10;100) in the region of the detection feature (20;120;220) is equal to or greater than a maximum stress experienced by the component (10;100).

4. The method as claimed in any one of Claims 1 to 3, wherein step (b) comprises:
(b1) visually inspecting a surface of the component (10;100) to thereby determine a crack status for each of the one or more topographical features.

5. The method as claimed in any one of Claims 1 to 4, the detection feature (20;120;220) comprising at least two topographical features of the component (10;100), whereby each of a first, second and any subsequent topographical features is positioned within a respective zone of the component (10;100) which, in use, experiences correspondingly increasing mechanical stress.

6. The method as claimed in any one of Claims 1 to 5, wherein the detection feature (20;120;220) is added to the component (10;100) after the component (10;100) is formed.

7. The method as claimed in any one of Claims 1 to 5, wherein the detection feature (20;120;220) is incorporated into the component (10;100) during the manufacture of the component (10;100).

8. A system for predicting a remaining serviceable life of a component (10;100) for a gas turbine engine, the component (10;100) comprising a detection feature (20;120;220), the detection feature (20;120;220) comprising one or more topographical features of the component (10;100), whereby the system comprises:
an detection device adapted to monitor the detection feature (20;120;220) to obtain a crack status for each of the one or more topographical features;
a calculating means such as a computer device having a processor portion and a data storage portion; and
a computer program comprising algorithms for analysing the crack status and predicting a remaining serviceable life of the component (10;100).

9. The system as claimed in Claim 8, wherein the detection feature (20;120;220) is positioned within a region of the component (10;100) such that, in use, a stress experienced by the component (10;100) in the region of the detection feature (20;120;220) is equal to or greater than a maximum stress experienced by the component (10;100).

10. The system as claimed in Claim 8 or Claim 9, wherein the monitoring of the detection feature (20;120;220) comprises a visual inspection of a surface of the component (10;100) in the region of the detection feature.

11. The system as claimed in any one of Claims 8 to 10, whereby the detection feature (20;120;220) comprises at least two topographical features of the component (10;100), and
each of a first, second and any subsequent topographical features is positioned within a respective zone of the component (10;100) which, in normal service conditions, experiences correspondingly increasing mechanical stress.

12. A topographical feature of a component (10;100) for a gas turbine engine, comprising one or more holes, wherein each of the one or more holes is positioned within a region of the component (10;100) such that, in use, a stress experienced by the component (10;100) in the region of any one of the one or more holes is equal to or greater than a maximum stress experienced by the component (10;100).

13. A topographical feature as claimed in Claim 12, wherein each of a first, second and any subsequent topographical features is positioned within a respective zone of the component (10;100) which, in normal service conditions, experiences correspondingly increasing mechanical stress.
